# EUROPÄISCHE PATENTANMELDUNG

(11) **EP 4 635 905 A1**
(43) Veröffentlichungstag der Anmeldung: **22.10.2025**
(21) Anmeldenummer: 24020120.2
(22) Anmeldetag: 16.04.2024
(51) Int. Cl.: C01B 3/04, B01D 53/047, C01B 3/56

(54) **VERFAHREN UND ANLAGE ZUR GEWINNUNG EINES WASSERSTOFFPRODUKTS UNTER VERWENDUNG VON AMMONIAK**

(71) Anmelder: Linde GmbH, 82049 Pullach (DE)
(72) Erfinder: Behrens, Axel, 82049 Pullach (DE); Reinke, Michael, 82049 Pullach (DE); Bohn, Jan-Peter, 82049 Pullach (DE)
(74) Vertreter: Fischer, Werner

(57) **Zusammenfassung**

Ein Verfahren (100) zur Gewinnung eines Wasserstoffprodukts wird vorgeschlagen. Dieses umfasst das Bereitstellen eines Produktgemischs (2) unter Verwendung einer mit einem Ammoniakeinsatz (1) gespeisten katalytischen Reaktoranordnung (50) und das Trennen des Produktgemischs (2) oder eines Teils hiervon unter Verwendung einer Druckwechseladsorptionsanordnung (70), wobei das Wasserstoffprodukt (3) und ein Restgas (4) erhalten werden, wobei das Produktgemisch (2) Wasserstoff und Stickstoff enthält, das Wasserstoffprodukt (3) einen höheren Wasserstoffgehalt und einen geringeren Stickstoffgehalt als das Produktgemisch (2) aufweist, und das Restgas (4) einen geringeren Wasserstoffgehalt und einen höheren Stickstoffgehalt als das Produktgemisch (2) aufweist, wobei das Restgas (4) oder ein Teil davon zur Beheizung der Reaktoranordnung (50) unter Erhalt eines Abgases (5) verfeuert wird, und wobei dem Produktgemisch (2) oder einem Teil hiervon und/oder dem Abgas (5) oder einem Teil hiervon Wärme in einem Niedertemperaturbereich, der unterhalb einer Kondensationstemperatur liegt, entzogen wird. Eine Anlage zur Durchführung eines entsprechenden Verfahrens wird ebenfalls vorgeschlagen.

## Beschreibung

### Gebiet

Die vorliegende Offenbarung betrifft ein Verfahren zur Gewinnung eines Wasserstoffprodukts unter Verwendung von Ammoniak und eine Anlage zur Durchführung des Verfahrens.

### Hintergrund

Wasserstoff stellt eine Alternative zu fossilen Brennstoffen dar, da Wasserstoff umweltfreundlich verbrennt, ohne schädliche Emissionen freizusetzen. Allerdings ist die Speicherung und Handhabung von Wasserstoff aufgrund der niedrigen Verflüssigungstemperatur und der besonders leichten Entflammbarkeit eine Herausforderung, die eine universelle Einsetzbarkeit reduziert. Für den Wasserstofftransport konzentriert sich die Forschung daher auf stabile Moleküle zur Bindung von Wasserstoff, wobei Ammoniak, Methanol, Dimethylether, Methylbenzen und Methansäure als vielversprechend gelten.

Besonders Ammoniak stellt als kohlenstofffreies Molekül eine vorteilhafte Speicherform für Wasserstoff dar. Die Handhabung von Ammoniak, insbesondere für die Düngemittelproduktion, ist erprobt und sicher. Die Herstellung erfolgt traditionell über das Haber-Bosch-Verfahren unter Verwendung von adiabaten Reaktoren. Die katalytische Spaltung von Ammoniak wird herkömmlicherweise mittels befeuerter Reaktoren durchgeführt. Die Produkte der Ammoniakspaltung, Wasserstoff und Stickstoff, werden dabei zunächst in einem Gemisch erhalten, aus dem der Wasserstoff abgetrennt werden kann.

Neuerdings werden Alternativen zu fossilen Energieträgern für die Ammoniaksynthese und Ammoniakspaltung erforscht, wie beispielsweise in einem Artikel von Ž. Ponikvar et al., "Electrification of Catalytic Ammonia Production and Decomposition Reactions: From Resistance, Induction, and Dielectric Reactor Heating to Electrolysis", ACS Appl. Energy Mater. 2002, 5, 5457-5472, zusammengefasst.

Wie auch unten noch erläutert, besteht im Zusammenhang mit der Ammoniakspaltung der Bedarf nach Verbesserungen bei der Abwärmenutzung.

### Übersicht

Vor diesem Hintergrund werden ein Verfahren zur Gewinnung eines Wasserstoffprodukts unter Verwendung von Ammoniak und eine Anlage zur Durchführung des Verfahrens mit den Merkmalen der unabhängigen Ansprüche vorgeschlagen. Ausgestaltungen sind jeweils Gegenstand der abhängigen Ansprüche und der nachfolgenden Beschreibung.

Das vorgeschlagene Verfahren zur Gewinnung eines Wasserstoffprodukts unter Verwendung von Ammoniak umfasst ein Bereitstellen eines Produktgemischs unter Verwendung einer mit Ammoniak gespeisten katalytischen Reaktoranordnung, wobei das Produktgemisch Wasserstoff und Stickstoff enthält. Die Reaktoranordnung kann mit kohlenwasserstofffreiem Brenngas und/oder elektrisch beheizt sein.

Das vorgeschlagene Verfahren umfasst ferner ein Trennen des Produktgemischs oder eines Teils hiervon unter Verwendung einer Druckwechseladsorptionsanordnung, wobei das Wasserstoffprodukt und ein Restgas erhalten werden. Das Wasserstoffprodukt weist einen höheren Wasserstoffgehalt und einen geringeren Stickstoffgehalt als das Produktgemisch auf. Insbesondere handelt es sich um reinen oder im Wesentlichen reinen Wasserstoff mit einem Wasserstoffgehalt von typischerweise mehr als 90, 95, 98, 99, 99,5 oder 99,9% auf molarer, Masse- oder Volumenbasis.

Das Restgas weist dagegen einen geringeren Wasserstoffgehalt und einen höheren Stickstoffgehalt als das Produktgemisch auf. Das Produktgemisch kann insbesondere auch nicht umgesetzten Ammoniak enthalten, der in das Restgas übergeht und dort in höherer Konzentration als in dem Produktgemisch vorliegt. Auch beträchtliche Anteile Wasserstoff können in dem Restgas enthalten sein.

Das vorgeschlagene Verfahren umfasst, dass das Restgas oder ein Teil davon unter Erhalt eines Abgases zur Beheizung der Reaktoranordnung verfeuert wird, und dass dem Produktgemisch oder einem Teil hiervon und/oder dem Abgas oder einem Teil hiervon Wärme in einem Niedertemperaturbereich, der unterhalb einer Kondensationstemperatur liegt, entzogen wird.

Bei der Kondensationstemperatur handelt es sich insbesondere um eine Kondensationstemperatur von Wasser und/oder Ammoniak. Diese richtet sich auch nach den vorherrschenden Druckbedingungen, so dass es sich hierbei um die Kondensationstemperatur in einem bei der Wärmeübertragung vorherrschenden Druckbereich handelt.

Das vorgeschlagene Verfahren beruht auf der Erkenntnis, dass aufgrund das schwefel- und kohlenstofffreien Brenngassystems das Abgas unkritisch in Bezug auf den Säuretaupunkt ist. Dies ermöglicht eine Wärmeauskopplung aus dem Abgas unterhalb der Kondensationstemperatur von Wasser und/oder Ammoniak, unter Verwendung von Apparaten, die aus kostengünstigem Material gefertigt sind.

Eine weitere Wärmequelle stellt das in der katalytischen Reaktoranordnung erhaltene Produktgemisch dar, das herkömmlicherweise durch Umgebungsluftkühler abgekühlt wird, bevor es in die Druckwechseladsorptionseinrichtung geleitet wird. Beide Wärmequellen können in dem vorgeschlagenen Verfahren kombiniert oder separat genutzt werden.

In dem vorgeschlagenen Verfahren ist das Abgas frei oder im Wesentlichen frei von Kohlenstoff- und/oder Schwefeloxiden oder Hydraten hiervon. Der Begriff "frei" soll dabei nicht ausschließen, dass Spurengehalte von beispielsweise weniger als 1, 0,5 oder 0,1% entsprechender Komponenten auf molarer, Masse- oder Volumenbasis enthalten sein können. Durch die Freiheit an entsprechenden Verbindungen besteht keine Gefahr für Materialschädigungen durch kondensierende Säuren.

In hier vorgeschlagenen Ausgestaltungen ist der erwähnte Niedertemperaturbereich unterhalb der Kondensationstemperatur insbesondere ein Temperaturbereich von 150°C bis Umgebungstemperatur, wobei die Umgebungstemperatur beispielsweise bei 10 bis 40 °C. Er liegt also insbesondere unterhalb des Taupunkts von Kohlensäure und/oder schwefliger Säure in dem betrachteten System und unter den vorherrschenden Bedingungen. Die Verwendung eines derartigen Temperaturbereichs ist mit kohlenwasserstofffreiem und schwefelfreiem Brenngas möglich, ohne Schäden an den eingesetzten Apparaten befürchten zu müssen.

In Ausgestaltungen des hier vorgeschlagenen Verfahrens wird Wärme des Produktgemischs oder eines Teils hiervon zur Überhitzung und/oder Verdampfung des der katalytischen Reaktoranordnung zugeführten Ammoniakeinsatzes oder eines Teils hiervon verwendet, bevor ihm die Wärme in Niedertemperaturbereich entzogen wird. Entsprechende Ausgestaltungen ermöglichen daher eine vorteilhafte Wärmerückgewinnung aus dem Produktgemisch auch auf einem höheren Temperaturniveau.

In Ausgestaltungen des hier vorgeschlagenen Verfahrens wird das Produktgemisch oder ein Teil hiervon der Druckwechseladsorptionsanordnung zugeführt, nachdem diesem die Wärme in dem Temperaturbereich unterhalb der Kondensationstemperatur entzogen wird. Das Produktgemisch erreicht so der für die Druckwechseladsorption geeigneten Temperaturbereich ohne die herkömmlicherweise erfolgende Abfuhr von Wärme in einem Umgebungsluftkühler. Jedoch kann auch eine entsprechende Kühlung vorgesehen sein.

In Ausgestaltungen des vorgeschlagenen Verfahrens ist vorgesehen, dass die in dem Niedertemperaturbereich entzogene Wärme oder ein Teil hiervon in einer Stromerzeugungseinrichtung verwendet wird. Auf diese Weise kann durch Nutzung von Niedertemperaturwärme elektrischer Strom gewonnen werden, der für eine Autarkisierung der für Durchführung des erfindungsgemäßen Verfahrens eingesetzten Anlage verwendet oder beispielsweise in ein lokales, regionales oder überregionales Netz eingespeist werden kann.

In Ausgestaltungen des vorgeschlagenen Verfahrens ist vorgesehen, dass die Stromerzeugungseinrichtung einen Arbeitsmittelkreislauf umfasst, der die Wärme oder einen Teil hiervon aufnimmt. Auf diese Weise kann die Niedertemperaturwärme auf ein höheres Temperaturniveau "angehoben" werden.

In Ausgestaltungen des vorgeschlagenen Verfahrens ist vorgesehen, dass der Arbeitsmittelkreislauf als ein organischer Rankine-Kreislauf (engl. Organic Rankine Cycle, ORC) ausgebildet ist. In einem solchen Kreislauf, der auf dem Gebiet der Wärmenutzung an sich bekannt ist, wird ein Betrieb von Expansionsturbinen (bzw. Dampfmotoren oder Hubkolbenexpandern), die einen Generator antreiben, mit einem anderen Arbeitsmedium als Wasserdampf ermöglicht. Als Arbeitsmedium werden organische Flüssigkeiten mit einer niedrigen Verdampfungstemperatur verwendet. Es können beispielsweise Silikonöl, bekannte Kältemittel oder kohlenwasserstoffhaltige Fluide als Arbeitsmedien verwendet werden.

In Ausgestaltungen des vorgeschlagenen Verfahrens ist vorgesehen, dass die Wärme in dem Niedertemperaturbereich sowohl dem Produktgemisch als auch dem Abgas entzogen und derselben oder unterschiedlichen Nutzungen zugeführt wird. Beispielsweise können die beiden Wärmequellen denselben Arbeitsmittelkreislauf speien, so dass sich entsprechende Apparate einsparen lassen. Auch kann beispielsweise ein Teil der Wärme direkt, d.h. für Heizzwecke, und ein verbleibender Rest zur Stromerzeugung genutzt werden. Dies kann auch zu unterschiedlichen Zeiten zu unterschiedlichen Anteilen erfolgen.

Die vorgeschlagene Anlage zur Gewinnung eines Wasserstoffprodukts unter Verwendung von Ammoniak ist zum Bereitstellen eines Produktgemischs unter Verwendung einer mit Ammoniak gespeisten katalytischen Reaktoranordnung und zum Trennen des Produktgemischs oder eines Teils hiervon unter Verwendung einer Druckwechseladsorptionsanordnung, wobei das Wasserstoffprodukt und ein Restgas erhalten werden, eingerichtet, wobei das Produktgemisch Wasserstoff und Stickstoff enthält, das Wasserstoffprodukt einen höheren Wasserstoffgehalt und einen geringeren Stickstoffgehalt als das Produktgemisch aufweist, und das Restgas einen geringeren Wasserstoffgehalt und einen höheren Stickstoffgehalt als das Produktgemisch aufweist, wobei das Restgas oder ein Teil davon zur Beheizung der Reaktoranordnung unter Erhalt eines Abgases verfeuert wird, und wobei dem Produktgemisch oder einem Teil hiervon und/oder dem Abgas oder einem Teil hiervon Wärme in einem Niedertemperaturbereich, der unterhalb einer Kondensationstemperatur liegt, entzogen wird.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

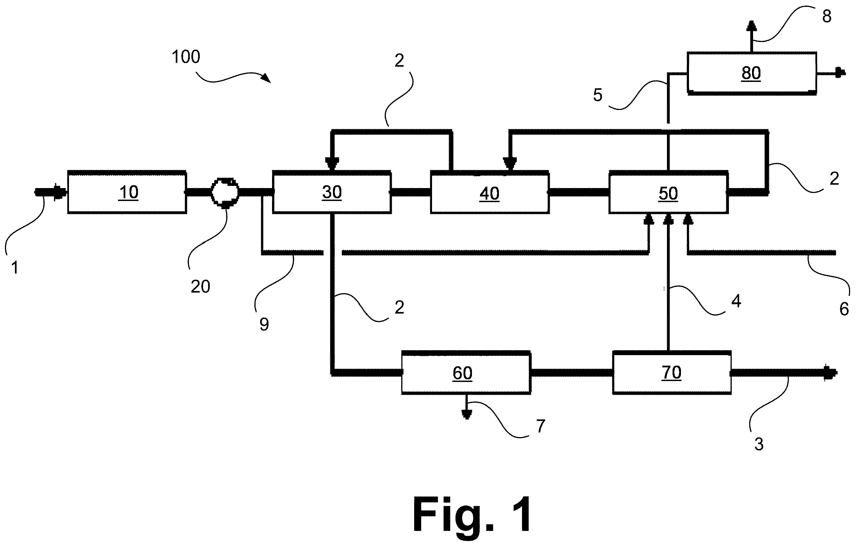

Eine Ausführungsform der hier vorgeschlagenen Lösung wird nachfolgend rein beispielhaft unter Bezugnahme auf die beigefügte Figur 1 beschrieben.

Die nachfolgend beschriebenen Ausführungsform wird lediglich zu dem Zweck beschrieben, den Leser beim Verständnis der beanspruchten und zuvor erläuterten Merkmale zu unterstützen. Sie stellt lediglich ein repräsentatives Beispiel dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorstehenden und nachfolgenden Erläuterungen und Definitionen können für alle oder einen Teil der hier vorgestellten Ausgestaltungen gelten, und die Erläuterung bestimmter Aspekte im Zusammenhang mit nur einem Teil oder einer der Ausgestaltungen soll keineswegs dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 70, 80, 90, 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 20, 10, 5, 1, 0,1 oder 0,01 % dieser Komponenten in Summe oder als Einzelwerte enthält.

Immer dann, wenn zuvor und nachfolgend von "Ammoniak" die Rede ist, sei darunter auch sogenannter technischer Ammoniak (engl. Anhydrous Ammonia) verstanden, also Ammoniak geringerer Reinheit, jedoch mit typischerweise mehr als 90% oder 95% Ammoniakgehalt auf Mol-, Gewichts- oder Volumenbasis. Mit "Ammoniak" kann dabei auch ein im soeben erläuterten Sinn "im Wesentlichen" Ammoniak enthaltendes Gemisch verstanden werden.

Verfahren und Anlagen zur Ammoniakspaltung sind bekannt. Beispielsweise kann auf die eingangs zitierte Literatur verwiesen werden. Bei der Ammoniakspaltung sind allgemein erhöhte Reaktionsdrücke bevorzugt, um auf einen stromabwärtigen Produkt- oder Wasserstoffverdichter verzichten zu können

Sämtliche hier verwendeten Prozentangaben können sich auf Mol-, Mengen- oder Volumenanteile beziehen. Druckangaben in bar sind, soweit nicht anders erläutert, als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

In Figur 1 ist ein Verfahren zur Bereitstellung eines Wasserstoffprodukts aus Ammoniak gemäß einer hier vorgeschlagenen Ausgestaltung veranschaulicht und insgesamt mit 100 bezeichnet.

In dem Verfahren 100 wird ein flüssiger Ammoniakeinsatz 1 bereitgestellt, der optional in einer Speichereinheit 10 zwischengespeichert und aus dieser mittels einer Pumpe 20 einer Verdampfung 30 und anschließenden Überhitzung 40 zugeführt werden kann. Anschließend erfolgt eine Umsetzung in einer Reaktoranordnung 50 mit einem oder mehreren katalytischen Reaktoren, in der ein Ammoniak, Wasserstoff und Stickstoff enthaltendes Produktgemisch 2 erhalten wird. Das Produktgemisch 2 wird für die Überhitzung 40 und die Verdampfung 30 verwendet und dabei abgekühlt. Ein Teil des Ammoniakeinsatzes kann auch als Brenngas 9 für die Beheizung der Reaktoranordnung 50 verwendet werden.

Nach der erwähnten Abkühlung wird das Produktgemisch 2 einer Niedertemperaturwärmenutzung 60 zugeführt, in der dem Produktgemisch 2 Wärme in einem Niedertemperaturbereich, der unterhalb einer Kondensationstemperatur von Wasser und Ammoniak liegt, entzogen wird, wie oben erläutert. Die abgeführte und wie oben zu unterschiedlichen Ausgestaltungen erläutert genutzte Wärme, oder entsprechend gewonnene elektrische Energie, ist mit einem Pfeil 7 veranschaulicht.

Hieran anschließend wird das Produktgemisch 2 einer Druckwechseladsorptionsanordnung 70 zugeführt, in der ein Wasserstoffprodukt 3 und ein Restgas 4 gebildet werden. Das Restgas 4, das noch gewisse Anteile Wasserstoff und ansonsten überwiegend Stickstoff und ggf. Restammoniak enthält, kann zusammen mit dem als Brenngas 9 verwendeten Teil des Ammoniakeinsatzes 1 und Verbrennungsluft 6 zu einem Abgas 5 verbrannt werden, wobei hierdurch gewonnene Wärme zur Beheizung der Reaktoreinheit 50 verwendet wird.

Auch das Abgas 5 wird einer Niedertemperaturwärmenutzung 80 zugeführt, in der dem Abgas 5 Wärme in einem Niedertemperaturbereich, der unterhalb einer Kondensationstemperatur von Wasser und Ammoniak liegt, entzogen wird, wie oben erläutert. Die abgeführte Wärme, oder entsprechend gewonnene elektrische Energie, ist mit einem Pfeil 8 veranschaulicht.

## Patentansprüche

1. Verfahren (100) zur Gewinnung eines Wasserstoffprodukts (3) unter Verwendung eines Ammoniakeinsatzes (1), das umfasst:
Bereitstellen eines Produktgemischs (2) unter Verwendung einer mit dem Ammoniakeisatz (1) gespeisten katalytischen Reaktoranordnung (50); und
Trennen des Produktgemischs (2) oder eines Teils hiervon unter Verwendung einer Druckwechseladsorptionsanordnung (70), wobei das Wasserstoffprodukt (3) und ein Restgas (4) erhalten werden, wobei das Produktgemisch (2) Wasserstoff und Stickstoff enthält, das Wasserstoffprodukt (3) einen höheren Wasserstoffgehalt und einen geringeren Stickstoffgehalt als das Produktgemisch (2) aufweist, und das Restgas (4) einen geringeren Wasserstoffgehalt und einen höheren Stickstoffgehalt als das Produktgemisch (2) aufweist, wobei das Restgas (4) oder ein Teil davon zur Beheizung der Reaktoranordnung (50) unter Erhalt eines Abgases (5) verfeuert wird, und wobei dem Produktgemisch (2) oder einem Teil hiervon und/oder dem Abgas (5) oder einem Teil hiervon Wärme in einem Niedertemperaturbereich entzogen wird, der unterhalb einer Kondensationstemperatur liegt.

2. Verfahren (100) nach Anspruch 1, bei dem das Abgas (5) frei von Kohlenstoff- und/oder Schwefeloxiden oder Hydraten hiervon ist.

3. Verfahren (100) nach Anspruch 1 oder 2, bei dem der Niedertemperaturbereich ein Temperaturbereich von 150°C bis Umgebungstemperatur ist.

4. Verfahren (100) nach einem der vorstehenden Ansprüche, bei dem Wärme des Produktgemischs (2) oder eines Teils hiervon zur Überhitzung und/oder Verdampfung des Ammoniaks (1) oder eines Teils hiervon verwendet wird, bevor diesem die Wärme in dem Niedertemperaturbereich entzogen wird.

5. Verfahren (100) nach einem der vorstehenden Ansprüche, bei dem das Produktgemisch (2) oder ein Teil hiervon der Druckwechseladsorptionsanordnung (70) zugeführt wird, nachdem diesem die Wärme in dem Temperaturbereich unterhalb der Kondensationstemperatur entzogen wird.

6. Verfahren (100) nach einem der vorstehenden Ansprüche, bei dem die in dem Niedertemperaturbereich entzogene Wärme oder ein Teil hiervon einer Stromerzeugungseinrichtung verwendet wird.

7. Verfahren (100) nach Anspruch 6, bei dem die Stromerzeugungseinrichtung einen Arbeitsmittelkreislauf umfasst, der die Wärme oder einen Teil hiervon aufnimmt.

8. Verfahren (100) nach Anspruch 7, bei dem der Arbeitsmittelkreislauf als ein organischer Rankine-Kreislauf ausgebildet ist.

9. Verfahren (100) nach einem der vorstehenden Ansprüche, bei dem die Wärme in dem Niedertemperaturbereich sowohl dem Produktgemisch (2) als auch dem Abgas (5) entzogen und derselben oder unterschiedlichen Nutzungen zugeführt wird.

10. Anlage zur Gewinnung eines Wasserstoffprodukts (3) unter Verwendung eines Ammoniakeinsatzes (1), die zur Durchführung folgender Schritte eingerichtet ist:
Bereitstellen eines Produktgemischs (2) unter Verwendung einer mit dem Ammoniakeinsatz (1) gespeisten katalytischen Reaktoranordnung (50); und
Trennen des Produktgemischs (2) oder eines Teils hiervon unter Verwendung einer Druckwechseladsorptionsanordnung (70), wobei das Wasserstoffprodukt (3) und ein Restgas (4) erhalten werden, wobei das Produktgemisch (2) Wasserstoff und Stickstoff enthält, das Wasserstoffprodukt (3) einen höheren Wasserstoffgehalt und einen geringeren Stickstoffgehalt als das Produktgemisch (2) aufweist, und das Restgas (4) einen geringeren Wasserstoffgehalt und einen höheren Stickstoffgehalt als das Produktgemisch (2) aufweist, wobei das Restgas (4) oder ein Teil davon zur Beheizung der Reaktoranordnung (50) unter Erhalt eines Abgases (5) verfeuert wird, und wobei dem Produktgemisch (2) oder einem Teil hiervon und/oder dem Abgas (5) oder einem Teil hiervon Wärme in einem Niedertemperaturbereich, der unterhalb einer Kondensationstemperatur liegt, entzogen wird.

11. Anlage nach Anspruch 10, die zur Durchführung eines Verfahrens nach einem der Ansprüche 1 bis 9 eingerichtet ist.
